(19) Europäisches Patentamt
European Patent Office
Office européen des brevets

(11) Numéro de publication: **0 238 770 B1**

(12) **FASCICULE DE BREVET EUROPEEN**

(45) Date de publication du fascicule du brevet:
25.04.90

(51) Int. Cl.⁴: **B60N 2/12, B60N 2/48**

(21) Numéro de dépôt: **86402965.7**

(22) Date de dépôt: **30.12.86**

(54) Siège à dossier inclinable, notamment siège arrière de véhicule automobile.

(30) Priorité: **27.01.86 FR 8601087**

(43) Date de publication de la demande:
**30.09.87 Bulletin 87/40**

(45) Mention de la délivrance du brevet:
**25.04.90 Bulletin 90/17**

(84) Etats contractants désignés:
**DE GB IT**

(56) Documents cités:
**DE-A- 3 332 729**
**FR-A- 1 499 448**
**FR-A- 2 109 405**
**FR-A- 2 375 073**
**GB-A- 2 106 380**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Levitre, Gilles, 28, Chemin du Pont, F-92230 Gennevilliers(FR)**
Inventeur: **Prion, Christian, 1, Square Yves du Manoir, F-91300 Massy(FR)**

(74) Mandataire: **Polus, Camille et al, c/o Cabinet Lavoix 2, Place d'Estienne d'Orves, F-75441 Paris Cedex 09(FR)**

ACTORUM AG

## Description

L'invention concerne un siège à dossier inclinable, notamment un siège arrière de véhicule automobile.

Les véhicules automobiles de tourisme réalisés jusqu'à présent comportent en général des sièges arrière, qui, contrairement aux sièges avant, sont dépourvus de moyens de réglage de l'angle d'inclinaison du dossier par rapport au coussin. On est en effet gêné, pour incliner les dossiers des sièges arrière, par les bagages placés éventuellement dans le coffre et surtout par la tablette arrière qui constitue, avec lesdits dossiers, les moyens de séparation du coffre de l'habitacle.

On pourrait bien sûr envisager de retirer la tablette à chaque fois que l'on souhaite incliner un siège arrière mais cette solution serait d'utilisation peu pratique.

On pourrait également envisager un dossier de siège arrière dont la partie supérieure serait suffisamment basse pour que le dossier puisse être incliné en passant sous la tablette arrière. Toutefois, un tel siège serait inconfortable en position inclinée car la tête du passager serait gênée par la tablette. En outre, dans le cas où l'on voudrait munir de tels sièges d'appui-tête afin d'améliorer le confort des passagers, il faudrait retirer ou escamoter ceux-ci à chaque fois que l'on souhaiterait incliner les sièges afin que le dossier puisse passer sous la tablette.

La présente invention se propose de remédier aux inconvénients précités.

Elle a pour objet un siège à dossier inclinable, notamment un siège arrière de véhicule automobile, muni à sa partie supérieure d'au moins un appui-tête, articulé sur un axe horizontal solidaire du dossier, tel que décrit, par exemple, dans le brevet FR-A 2 109 405 ou FR-A 1 499 448.

Selon l'invention, chaque appui-tête est muni de moyens élastiques tendant à le faire basculer vers l'arrière à l'encontre d'une butée solidaire du dossier pour un angle d'inclinaison du dossier inférieur à une valeur prédéterminée et à l'encontre d'une butée fixe par rapport à la carrosserie du véhicule pour un angle d'inclinaison du dossier supérieur ou égal à ladite valeur.

Ainsi, l'appui-tête se trouve approximativement dans le prolongement du dossier quand l'angle d'inclinaison est inférieur à ladite valeur, et se trouve incliné vers la face avant du dossier pour un angle d'inclinaison du dossier supérieur à ladite valeur, l'angle d'inclinaison de l'appui-tête par rapport au dossier croissant en même temps que l'angle d'inclinaison du dossier.

Dans un mode préféré de réalisation de l'invention, la butée fixe par rapport à la carrosserie du véhicule est constituée par la tablette arrière du véhicule.

De préférence, la butée solidaire du dossier est constituée par l'armature du dossier.

L'axe sur lequel est articulé l'appui-tête est avantageusement muni de moyens suceptibles de le mouvoir en translation le long de l'axe du dossier, pour un réglage en hauteur de l'appui-tête.

D'autres particularités et avantages de l'invention apparaîtront au cours de la description qui va suivre d'un mode de réalisation donné uniquement à titre d'exemple, et représenté sur les dessins annexés :

- la Figure 1 est une vue en coupe longitudinale et élévation d'un mode de réalisation du siège arrière inclinable selon l'invention, dans une position peu inclinée du dossier pour laquelle l'appui-tête se trouve dans le prolongement du dossier;

- la Figure 2 est une vue analogue à la Figure 1, dans une position très inclinée du dossier, pour laquelle l'appui-tête, en butée contre la tablette arrière, se trouve incliné vers la face avant du dossier;

- la Figure 3 est une vue en perspective avec arrachements montrant la partie supérieure du dossier de la Figure 1.

Le siège arrière de véhicule représenté sur les Figures comporte un coussin 1 supporté par la caisse 2 du véhicule et sur lequel, de façon classique, est articulé en 3 un dossier 4 susceptible d'être incliné d'un angle variable par rapport au coussin 1 par des moyens classiques non représentés. Le dossier 4 est placé immédiatement devant le coffre à bagages 5 qu'il contribue, avec la tablette arrière 6 du véhicule, à isoler de l'habitacle 7.

Le dossier 4 est muni à sa partie supérieure d'un appui-tête 8 solidaire d'une tige-support 8a articulée sur un axe 9 horizontal solidaire du dossier 4. Un ressort 10, dont l'une des extrémités est logée dans un oeil 11 de la tige 8a et dont l'autre extrémité vient en appui contre un fond plan 12 assemblé, de façon classique, à l'armature 13 du dossier 4, tend à faire basculer l'appui-tête 8 vers l'arrière du dossier 4.

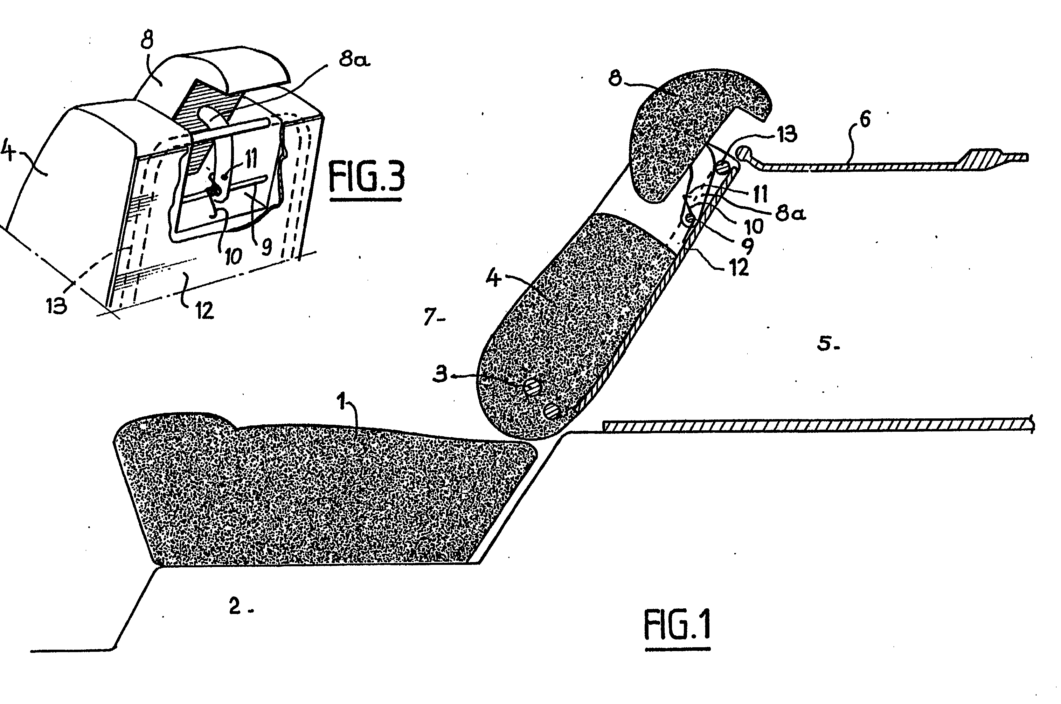

Dans la position du dossier 4 représentée sur la Figure 1, la tige 8a de l'appui-tête vient en butée contre l'armature 13. L'appui-tête 8 se trouve alors approximativement dans le prolongement du dossier 4.

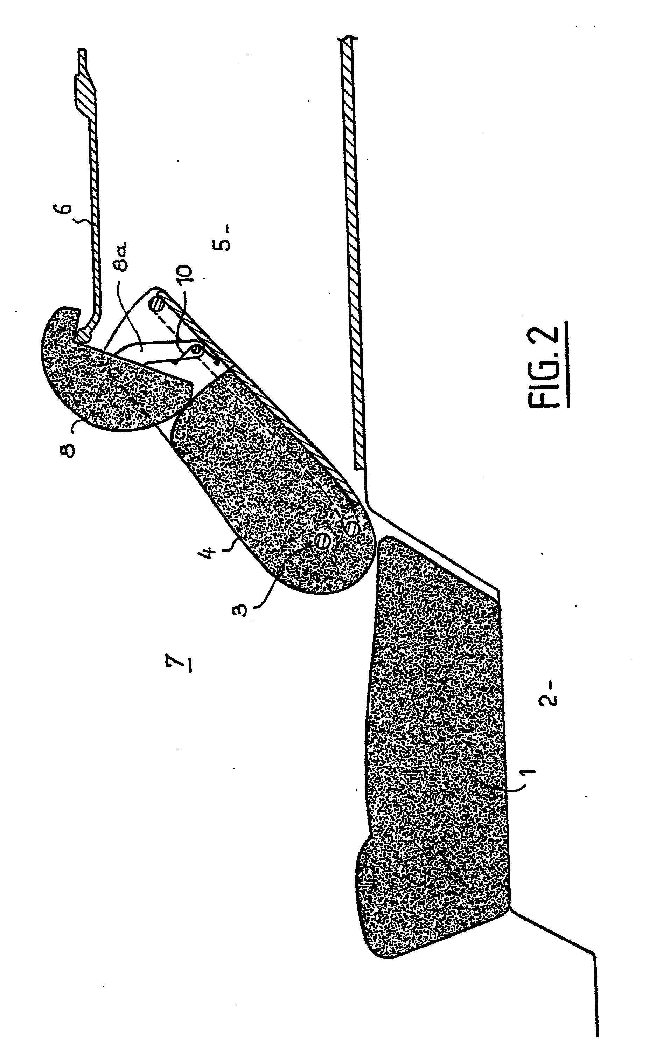

Dans la position de la Figure 2, le dossier 4 est très incliné par rapport au coussin 1. Ceci est rendu possible par le fait que la partie supérieure du dossier 4 est suffisamment basse pour passer sous la tablette arrière 6. Dans cette position, l'appui-tête 8 vient en butée contre la tablette 6 et se trouve donc incliné vers la face avant du dossier 4.

Le siège arrière qui vient d'être décrit est confortable et d'utilisation pratique : son dossier 4 peut en effet être incliné, par des moyens classiques, comme un siège avant, sans que l'on soit gêné par la présence de la tablette arrière 6 bien que la hauteur totale de l'ensemble dossier-appui-tête ne puisse passer sous la tablette. On utilise au contraire la tablette 6 pour maintenir l'appui-tête 8 dans une position confortable pour le passager, celui-ci pouvant, sans effort, garder sa tête droite et regarder confortablement le paysage, même si son dossier est très incliné. Bien entendu, l'angle d'inclinaison du dossier 4 à partir duquel l'appui-tête 8 vient en butée contre le dossier dépend de la structure et des positions relatives des divers éléments constituant l'invention; il pourra donc varier avec chaque mode de réalisation.

Bien entendu, l'invention n'est pas limitée au mode de réalisation qui vient d'être décrit.

Ainsi, l'appui-tête 8 pourrait être réglable en hauteur soit au moyen d'une tige 8a télescopique, soit en munissant l'axe horizontal 9 sur lequel est articulée la tige 8a de moyens susceptibles de le mouvoir en translation le long de l'axe du dossier 4. Dans ce cas, il pourra être nécessaire à l'utilisateur de veiller à ce que l'appui-tête 8 soit placé à une hauteur telle qu'il puisse venir en butée contre la tablette arrière 6, avant d'incliner le dossier 4. Le ressort 10 peut par ailleurs être remplacé par des moyens élastiques équivalents.

Bien entendu, la tablette arrière 6 peut être une tablette du type amovible ou du type mobile avec le hayon arrière lors de l'ouverture du coffre à bagages, pourvu qu'elle soit fixe par rapport à la carrosserie du véhicule en position normale d'utilisation. Il en est de même pour toute autre butée que l'on utiliserait pour l'invention, de façon analogue à la tablette.

D'autre part, l'invention peut également s'appliquer à une banquette arrière munie de plusieurs appui-tête articulés chacun sur un axe analogue à l'axe 9.

## Revendications

1. Siège à dossier inclinable (4), notamment siège arrière de véhicule automobile, muni à sa partie supérieure d'au moins un appui-tête (8), articulé sur un axe horizontal (9) solidaire du dossier (4), caractérisé en ce que l'appui-tête (8) est pourvu de moyens élastiques (10) tendant à le faire basculer vers l'arrière à l'encontre d'une butée (13) solidaire du dossier (4) pour un angle d'inclinaison du dossier (4) inférieur à une valeur prédéterminée, et à l'encontre d'une butée (6) fixe par rapport à la carrosserie du véhicule pour un angle d'inclinaison du dossier supérieur ou égal à ladite valeur.

2. Siège selon la revendication 1, caractérisé en ce que la butée fixe par rapport à la carrosserie du véhicule est constituée par la tablette arrière (6) du véhicule.

3. Siège selon l'une des revendications 1 et 2, caractérisé en ce que la butée solidaire du dossier (4) est constituée par l'armature (13) du dossier (4).

4. Siège selon l'une des revendications 1 à 3, caractérisé en ce que l'axe (9) sur lequel est articulé l'appui-tête (8) est muni de moyens susceptibles de le mouvoir en translation le long de l'axe du dossier (4) afin de permettre le réglage de l'appui-tête (8) en hauteur.

5. Siège selon l'une des revendications 1 à 3, caractérisé en ce que l'appui-tête (8) est solidaire d'une tige-support (8a) articulée sur l'axe horizontal (9) et télescopique, afin de permettre le réglage de l'appui-tête (8) en hauteur.

## Patentansprüche

1. Sitz mit neigbarer Rückenlehne (4), insbesondere Rücksitz eines Kraftfahrzeuges, der in seinem oberen Teil mit mindestens einer Nackenstütze (8) versehen ist, die an einer an der Rückenlehne (4) befestigten, horizontalen Achse (9) angelenkt ist, dadurch gekennzeichnet, daß die Nackenstütze (8) mit federnden Einrichtungen (10) versehen ist, die bestrebt sind, sie bei einem Neigungswinkel der Rückenlehne (4), der unter einem vorbestimmten Wert liegt, gegen einen an der Rückenlehne (4) befestigten Anschlag (13) und bei einem Neigungswinkel der Rückenlehne, der größer oder gleich diesem Wert ist, gegen einen bezüglich der Karosserie des Fahrzeugs feststehenden Anschlag (6) nach hinten kippen zu lassen.

2. Sitz nach Anspruch 1, dadurch gekennzeichnet, daß der bezüglich der Karosserie des Fahrzeugs feststehende Anschlag aus der hinteren Ablageplatte (6) des Fahrzeugs besteht.

3. Sitz nach Anspruch 1 oder 2, dadurch gekennzeichnet, daß der an der Rückenlehne (4) befestigte Anschlag aus dem Gestell (13) der Rückenlehne (4) besteht.

4. Sitz nach einem der vorhergehenden Ansprüche, dadurch gekennzeichnet, daß die Achse (9), an der die Nackenstütze (8) angelenkt ist, mit Einrichtungen versehen ist, die sie geradlinig längs der Achse der Rückenlehne (4) bewegen können, um die Höhenverstellung der Nackenstütze (8) zu gestatten.

5. Sitz nach einem der Ansprüche 1 bis 3, dadurch gekennzeichnet, daß die Nackenstütze (8) mit einer Tragstange (8a) fest verbunden ist, die an der horizontalen Achse (9) angelenkt ist, und teleskopartig ausgebildet ist, um die Höhenverstellung der Nackenstütze (8) zu gestatten.

## Claims

1. Seat with a tilting back (4), particularly the rear seat of a motor vehicle, provided in its upper part with at least one headrest (8) articulated on a horizontal spindle (9) integral with the back (4), characterized in that the headrest (8) is provided with elastic means (10) which tilt it towards the rear in opposition to an abutment (13) integral with the back (4) for an angle of tilt of the back (4) less than a predetermined value and in opposition to an abutment (6) fixed with respect to the vehicle body for an angle of tilt of the back equal to or greater than said value.

2. Seat according to claim 1, characterized in that the abutment fixed with respect to the vehicle body is constituted by the rear vehicle shelf (6).

3. Seat according to either the claims 1 and 2, characterized in that the integral abutment of the back (4) is constituted by the framework (13) of the latter.

4. Seat according to one of the claims 1 to 3, characterized in that the spindle (9) on which is articulated the headrest (8) is provided with means able to move in translation along the axis of back (4), in order to permit the height setting of the headrest (8).

5. Seat according to one of the claims 1 to 3, characterized in that the headrest (8) is integral with a support rod (8a) articulated to the horizontal spindle (9) and telescopic in order to permit the height setting of headrest (8).

FIG.3

FIG.1

EP 0 238 770 B1

FIG. 2

EP 0 238 770 B1